# EUROPEAN PATENT SPECIFICATION

(11) **EP 2 807 371 B1**
(45) Date of publication and mention of the grant of the patent: **06.04.2016**
(21) Application number: 12701250.8
(22) Date of filing: 25.01.2012
(51) Int. Cl.: F03D 7/04, F03D 80/00

(54) **WIND PARK WITH REAL TIME WIND SPEED MEASUREMENTS**
WINDPARK MIT ECHTZEIT-WINDGESCHWINDIGKEITSMESSUNGEN
PARC D'ÉOLIENNES À MESURES DE VITESSE DE VENT EN TEMPS RÉEL

(43) Date of publication of application: 03.12.2014
(73) Proprietor: ABB Research Ltd., 8050 Zürich (CH)
(72) Inventor: MARINOPOULOS, Antonis, S-722 28 Västerås (SE); LENDENMANN, Heinz, S-722 18 Västerås (SE); PAN, Jiuping, Raleigh, North Carolina 27606 (US); SRIVASTAVA, Kailash, S-722 28 Västerås (SE); ZARGHAMI, Mahyar, Raleigh, CA 95618 (US); REZA, Muhamad, S-723 44 Västerås (SE)
(74) Representative: Ahrengart, Kenneth
(86) International application number: PCT/EP2012/051117
(87) International publication number: WO 2013/110327

(56) References cited:
- WO-A1-2011/160634
- WO-A2-2011/000453
- US-A1- 2004 258 521
- US-A1- 2011 187 106
- US-A1- 2011 193 344
- US-A1- 2011 295 438

## Description

### Technical field

The present invention generally relates to power generation. Specifically, the present invention relates to a system for producing electrical power, including but not limited to systems using renewable energy sources and/or any other kind of power production system for which the produced power may fluctuate, and a method of predicting a magnitude of electrical power production by a system for producing electrical power.

### Background

Power plants based on fossil fuel or hydropower are in general deterministic in their power output behavior, in the sense that the output power from the power generator of the power plant may be controlled by controlling the input of the primary energy source or sources to the power generator. Power plants which are deterministic in the power output behavior are sometimes referred to as dispatchable power plants. For this type of power plant, the power output of the power generator of the power plant may be adjusted on demand, whereby predictions and changes in the power demand of an electricity grid connected to the power plant may be met.

Certain concerns, such as in particular environmental concerns, have led to increased interest in power plants and/or power generation techniques based on renewable energy sources like wind energy or solar energy. Such energy sources, the availability of which may not be controlled by an operator, are sometimes also referred to as intermittent energy sources. Due to the stochastic nature of intermittent energy sources, it may be difficult to accurately predict the power output of a power plant based on intermittent energy sources.

Power plants based on intermittent power sources such as wind energy or solar energy may be allowed to operate and generate power as much as possible given the availability of the intermittent energy sources. This situation might lead to increased demand for dispatchable power plants as operating energy reserves or energy storage systems to balance any active power mismatch occurring between the load demand in the power grid and the power generation in the power plants based on intermittent power sources, and/or an increased demand for dispatchable power plants or reactive power compensators to provide reactive power for regulating voltage.

Methods have been proposed to address the issue of predicting the power output of a power plant based on intermittent power sources. According to a first method, power generation of the power plant based on intermittent energy sources is predicted using weather forecasts. Although such a method may relatively accurately predict overall power generation during a relatively long period, e.g., on a yearly basis, short term prediction of power generation may become difficult since weather forecasts are typically performed at very large distances from the location of the power plant. According to a second method, active and/or reactive power compensation is installed in the power plant. In the context of the present application, active power compensation may involve energy storage systems or equipment such as one or more batteries and/or flywheels, etc. However, a predictive method or tool would be required in order to dimension the compensation in an efficient way. According to a third method, the power plant based on intermittent power sources is provided with dispatchable power generation capability in order to balance any mismatch occurring between the load demand in the power grid and the power generation in the power plant. However, a predictive method or tool would be required to operate the overall system in an efficient way.

US6975925B1 discloses a system including instruments that measure wind speed and energy output for each turbine of a wind farm. The system includes a sentry point to anticipate trends. The sentry point includes an anemometer, a thermometer and a barometer. The sentry point is located at a point that is upwind from the wind farm. At each wind turbine of the wind farm, the system includes an anemometer, a thermometer, and a barometer. Also included at each wind turbine are instruments that measure electrical power generated by the wind turbine. The sentry point provides a clue as to the trend in the wind speed and allows the system to adapt its forecasts according to any detected trends.

WO 2011/000453 A2 is another example of controlling a wind farm with prediction of wind fields across the farm.

### Summary

Particularly for wind farms including a relatively large number of wind turbines, the system disclosed in US6975925B1 may require frequent maintenance due to the number of instruments included in the system becoming relatively large. For a wind farm including a relatively large number of wind turbines, the cost of the wind farm may increase significantly due to such maintenance and/or also due to the relatively large number of instruments that may be required.

In view of the above discussion, a concern of the present invention is to provide a system for producing electrical power based on wind energy, which system is capable of predicting its power output at a specific point in time or at a specific time period in the future and may have a decreased need for maintenance.

A further concern of the present invention is to provide a system for producing electrical power based on wind energy, which system is capable of predicting its power output at a specific point in time or at a specific time period in the future and may be cost-effective and/or less expensive compared to the system disclosed in US6975925B1.

To address at least one of these concerns and other concerns, a system and a method in accordance with the independent claims are provided. Preferred embodiments are defined by the dependent claims.

According to a first aspect of the present invention, there is provided a system for producing electrical power. The system comprises a set of wind turbine units. Each wind turbine unit of the set of wind turbine units is adapted to produce electrical power based on kinetic energy extracted from wind. The system comprises a first plurality of sensors, a second plurality of sensors, and a processing unit.

Each sensor of the first plurality of sensors is adapted to sense at least one wind characteristic at a respective wind turbine unit of a proper subset of the set of wind turbine units.

In the context of the present application, by a proper subset of the set of wind turbine units it is meant a subset of the set of wind turbine units that is not equal to the complete set of wind turbine units.

Each sensor of the second plurality of sensors is arranged at a distance with respect to each of the wind turbine units in the set of wind turbine units. Each sensor of the second plurality of sensors is adapted to sense at least one wind characteristic at a location at which the sensor is arranged.

The processing unit and the first and second plurality of sensors are communicatively coupled such that the processing unit is able to receive sensed wind characteristics from each of the first and second plurality of sensors.

The processing unit is adapted to estimate at least one wind characteristic at each wind turbine unit that is not included in the proper subset of the set of wind turbine units, based on the sensed at least one wind characteristic at the respective wind turbine units of the proper subset of the set of wind turbine units, and an estimate of changes in wind characteristic at each wind turbine unit that is not included in the proper subset of the set of wind turbine units caused by presence of other wind turbine units of the set of wind turbine units.

The processing unit is adapted to predict a magnitude of electrical power production by the set of wind turbine units at at least one predefined point in time in the future based on the estimated wind characteristics and a statistical measure of a plurality of values of sensed wind characteristics obtained during at least one time period.

Hence, the estimated wind characteristics and sensed wind characteristics at the wind turbine units, as well as the wind characteristics sensed by the second plurality of sensors, are used for the prediction of the magnitude of electrical power production by the set of wind turbine units at at least one predefined point in time and/or at a specific time period in the future. The wind characteristics sensed by the second plurality of sensors may allow for 'correction' or improvement of the prediction of the magnitude of electrical power production as compared to utilizing only the estimated wind characteristics and sensed wind characteristics at the wind turbine units for the prediction of the magnitude of electrical power production.

For example, the wind characteristics sensed by the second plurality of sensors may be used to estimate an anticipated change in e.g. wind speed and/or direction at the wind turbine units at the at least one predefined point in time in the future. Based on the estimated change in wind speed and/or direction at the wind turbine units, and possibly also on parameters defining operation of the respective wind turbine units, change in electrical power production by the respective wind turbine units may be estimated or determined. Based on the estimated changes in electrical power production by the wind turbine units, the overall output power of the wind turbines at the at least one predefined point in time in the future may be predicted. The parameters defining operation of the respective wind turbine units may for example include configuration parameters such as rotor blade pitch angle and/or yaw angle, etc.

Sensors are provided which are adapted to sense at least one wind characteristic at a respective wind turbine unit of a proper subset of the set of wind turbine units in the system. Hence, sensing equipment for sensing at least one wind characteristic is not required to be provided for every wind turbine unit of the set of wind turbine units. However, at least one wind characteristic at each wind turbine unit is employed for performing the prediction or forecast of the magnitude of electrical power production by the set of wind turbine units at at least one predefined point in time in the future. This is achieved by estimating the at least one wind characteristic at each one of the wind turbine units that is not included in the proper subset of the set of wind turbine units, i.e. at each one of the wind turbine units that does not have a corresponding sensor of the first plurality of sensors, based on an estimate or model of changes in wind characteristic at each wind turbine unit that is not included in the proper subset of the set of wind turbine units caused by presence of other wind turbine units of the set of wind turbine units.

The estimate or model of changes in wind characteristic at each wind turbine unit that is not included in the proper subset of the set of wind turbine units caused by presence of other wind turbine units of the set of wind turbine units may for example be based on wake effect.

In the context of the present application, by wake effect it is meant an effect related to a wake being produced downstream or downwind of a wind turbine unit extracting energy from the wind incident on the rotor of the wind turbine unit, in which wake the wind speed is reduced compared to upstream or upwind of the wind turbine unit. As the wind flows downstream of the wind turbine unit, the wake may spread and eventually the wind flow may be subjected to substantially free flow conditions. With respect to an aggregation of wind turbine units such as in a wind farm, by wake effect it is meant an aggregated influence on the overall energy production of the wind farm which results from changes in wind speed caused by the influence of the wind turbines on each other. In an aggregation of wind turbine units, the wakes from different wind turbine units may influence each other.

Hence, wake calculations and/or wake modelling may be used for estimating the at least one wind characteristic at each one of the wind turbine units that is not included in the proper subset of the set of wind turbine units, which data is not available from sensor readings. Principles for such wake calculations and/or wake modelling can be found e.g. in N. O. Jensen, "A note on wind generator interaction", Risø-M-2411, Risø National Laboratory, M. Ali et al., "Effect of wake considerations on estimated cost of wind energy curtailments", 8th International Workshop on Large Scale Integration of Wind Power into Power Systems as well as Transmisssion Networks for Offshore WFs", 2009, and F. Koch et al., "Consideration of wind farm wake effect in powers system dynamic siumlation", 2005 IEEE Russia Power Tech, volume 2, issue 3, pages 1-7, 2005.

Alternatively or optionally, a machine learning algorithm or self learning algorithm may be used for estimating the at least one wind characteristic at each one of the wind turbine units that is not included in the proper subset of the set of wind turbine units. By means of a machine learning algorithm or self learning algorithm, the estimation may be performed in an iterative manner adapting to sensed at least one wind characteristics at the respective wind turbine units of the proper subset of the set of wind turbine units.

By sensing equipment for sensing the at least one wind characteristic not being required for every wind turbine unit of the set of wind turbine units, the need for and/or extent of maintenance may be decreased compared to the case where sensing equipment for sensing the at least one wind characteristic is required for all wind turbine units.

In addition or alternatively, by sensing equipment for sensing the at least one wind characteristic not being required for every wind turbine unit of the set of wind turbine units, the overall cost of the system, e.g. constituting or comprising a wind farm, may be less compared to if sensing equipment for sensing the at least one wind characteristic is required for all wind turbine units in the wind farm.

The at least one predefined point in time or time period in the future may for example be a point in time or a time period between one and thirty minutes or more after the prediction of the magnitude of electrical power production by the set of wind turbine units has been performed. However, the at least one predefined point in time in the future may be less than one minute after the prediction of the magnitude of electrical power production by the set of wind turbine units has been performed, depending on e.g. the distances between the second plurality of sensors and the wind turbine units and/or type and/or capacity of the communication paths or links between the processing unit and first and second plurality of sensors.

The processing unit and first and second plurality of sensors may for example be coupled via wired and/or wireless communication links such that the processing unit is able to receive sensed wind characteristics from each of the first and second plurality of sensors.

The at least one wind characteristic may for example comprise speed and/or direction of the wind and/or occurrence and/or level of turbulence.

According to a second aspect of the present invention, there is provided a method of predicting a magnitude of electrical power production by a system comprising a set of wind turbine units, where each wind turbine unit of the set of wind turbine units is adapted to produce electrical power based on kinetic energy extracted from wind.

The method comprises sensing at least one wind characteristic at respective wind turbine units of a proper subset of the set of wind turbine units.

At least one wind characteristic at a plurality of locations are sensed, where each of the plurality of locations is at a distance with respect to each of the wind turbine units in the set of wind turbine units.

Based on the sensed at least one wind characteristic at the respective wind turbine units of the proper subset of the set of wind turbine units and an estimate of changes in wind characteristic at each wind turbine unit that is not included in the proper subset of the set of wind turbine units caused by presence of other wind turbine units of the set of wind turbine units, at least one wind characteristic at each wind turbine unit that is not included in the proper subset of the set of wind turbine units is estimated.

The magnitude of electrical power production by the set of wind turbine units at at least one predefined point in time in the future is predicted based on the estimated wind characteristics and sensed wind characteristics.

Each wind turbine unit of the set of wind turbine units may be arranged at a distance from the other wind turbine units of the set of wind turbine units so as to form an assembly of wind turbine units.

The proper subset of the set of wind turbine units may include wind turbine units that are situated at a periphery or boundary of the wind turbine unit assembly.

For example, the proper subset of the set of wind turbine units may include only and/or all wind turbine units that are situated at the periphery, or 'edge', of the wind turbine unit assembly. Hence, wind characteristics such as wind speed may be measured at wind turbine units situated at the periphery of the wind turbine unit assembly. Then, wind characteristics such as wind speed at wind turbine units at which no wind characteristics measurements are performed, e.g. situated within the boundary of the wind turbine assembly, may then be estimated using wind modelling, including e.g. wake effect calculations and/or other type of modelling, based on the measured wind characteristics.

The estimated wind characteristics and/or sensed wind characteristics may be stored. To this end, the system may comprise a storage unit adapted to store the estimated wind characteristics and/or sensed wind characteristics. The storage unit may for example comprise a computer server or the like communicatively coupled with the processing unit so as to allow the processing unit to retrieve stored wind characteristics and/or other data from the storage unit.

The storage unit and the processing unit and/or any other component of the system may for example be coupled by means of a wired or wireless communication link.

The storage unit and the processing unit may be integrally arranged.

The magnitude of electrical power production by the set of wind turbine units at least at the predefined point in time in the future may be predicted further on basis of stored estimated wind characteristics and/or sensed wind characteristics, e.g. by means of a self learning algorithm or machine learning algorithm. Hence, the prediction may be adapted to estimated wind characteristics and/or sensed wind characteristics.

Wind turbine units frequently utilize induction generators. Induction generators may be preferred due to being relatively inexpensive, rugged, and requiring relatively little maintenance. However, induction generators are asynchronous generators which require reactive power from the power grid to which the wind power plant or wind farm is connected in order to operate. To this end, capacitor based reactive power compensation may for example be used. Since reactive power generally varies with output power, the reactive power compensation may be required to be adjusted as the output power varies. Wind turbine units utilizing induction generators generally consume reactive energy under all or substantially all load conditions, as well as at or during start-up of the wind turbine unit. During regular operation of the wind turbine unit, start-ups may be required on several occasions during an extended period of, e.g., twenty-four hours.

Each wind turbine unit of the set of wind turbine units may be arranged at a distance from the other wind turbine units of the set of wind turbine units so as to form an assembly of wind turbine units. The assembly of wind turbine units may be interconnected by means of a local wind turbine grid that also connects the wind turbine units to a collecting point. The collecting point may be connected via a power transmission system to an interface to power grid to which the system is connected via a point of common coupling (PCC). The interface may be adapted to adapt voltage, frequency and/or reactive power of the power transmission system to the voltage, frequency and/or reactive power demand, respectively, of the power grid in the PCC.

Output voltage supplied to a power grid to which the system is connected may be compensated for reactive and/or active power consumption of the set of wind turbine units. To this end, the system may comprise a reactive and/or active power compensation unit adapted to compensate output voltage supplied to a power grid to which the system is connected for reactive and/or active power consumption of the set of wind turbine units.

Reactive power compensation may for example be capacitor based.

The reactive and/or active power compensation unit may be adapted to compensate output voltage supplied to a power grid to which the system is connected for reactive and/or active power consumption of the set of wind turbine units based on the predicted magnitude of electrical power production by the set of wind turbine units at least at the predefined point in time in the future. This may allow for an increased accuracy in dimensioning the compensation of the output voltage supplied to a power grid to which the system is connected.

The prediction of the magnitude of electrical power production by the set of wind turbine units at at least one predefined point in time in the future may be based on a plurality of values of sensed wind characteristics.

For example, a plurality of successive values of the at least one wind characteristic at the respective wind turbine units of the proper subset of the set of wind turbine units may be sensed. To this end, each sensor of the first plurality of sensors may be adapted to sense a plurality of successive values of the at least one wind characteristic at the respective wind turbine unit of the proper subset of the set of wind turbine units.

Alternatively or optionally, a plurality of successive values of the at least one wind characteristic at the respective ones of the plurality of locations may be sensed. To this end, each sensor of the second plurality of sensors may be adapted to sense a plurality of successive values of the at least one wind characteristic at the location at which the sensor is arranged.

For example, the prediction of the magnitude of electrical power production by the set of wind turbine units at at least one predefined point in time in the future may be based on a mean or another statistical measure of a plurality of values of sensed wind characteristics obtained during a certain time period or periods.

According to a third aspect of the present invention, there is provided a computer program product adapted to, when executed in a processor unit, perform a method according to the present invention.

According to a fourth aspect of the present invention, there is provided a computer-readable storage medium on which there is stored a computer program product. The computer program product is adapted to, when executed in a processor unit, perform a method according to the present invention.

In the context of the present application, the term connected or coupled is not limited to be construed as directly connected or coupled, but also encompasses functional connections having intermediate components. For example, on one hand, if an output of a first component is connected to an input of a second component, this comprises a direct connection. On the other hand, if an electrical conductor directly supplies an electrical signal from the output of the first component substantially unchanged to the input of the second component, alternatively via one or more additional components, the first and second component are also connected. However, the connection is functional in the sense that a gradual or sudden change in the electrical signal from the output of the first component results in a corresponding or modified change in the signal that is input to the second component.

Further objects and advantages of the present invention are described in the following by means of exemplifying embodiments.

### Brief description of the drawings

Exemplifying embodiments of the invention will be described below with reference to the accompanying drawings, in which:
Fig. 1 is a schematic block diagram of a system for producing electrical power according to an embodiment of the present invention;
Fig. 2 is a schematic block diagram of a distribution power grid in accordance with an embodiment of the present invention;
Fig. 3 is a schematic view of a computer-readable storage medium according to an embodiment of the present invention; and
Figs. 4 and 5 are schematic flowcharts of methods according to embodiments of the present invention of predicting a magnitude of electrical power production by a system.

In the accompanying drawings, the same reference numerals denote the same or similar elements throughout the views.

### Detailed description

The present invention will now be described fully hereinafter with reference to the accompanying drawings, in which exemplifying embodiments of the present invention are shown. The present invention may, however, be embodied in many different forms and should not be construed as limited to the embodiments set forth herein; rather, these embodiments are provided by way of example so that this disclosure will convey the scope of the invention to those skilled in the art. Furthermore, like numbers refer to like or similar elements or components throughout. The steps of any method disclosed herein do not have to be performed in the order disclosed unless explicitly stated.

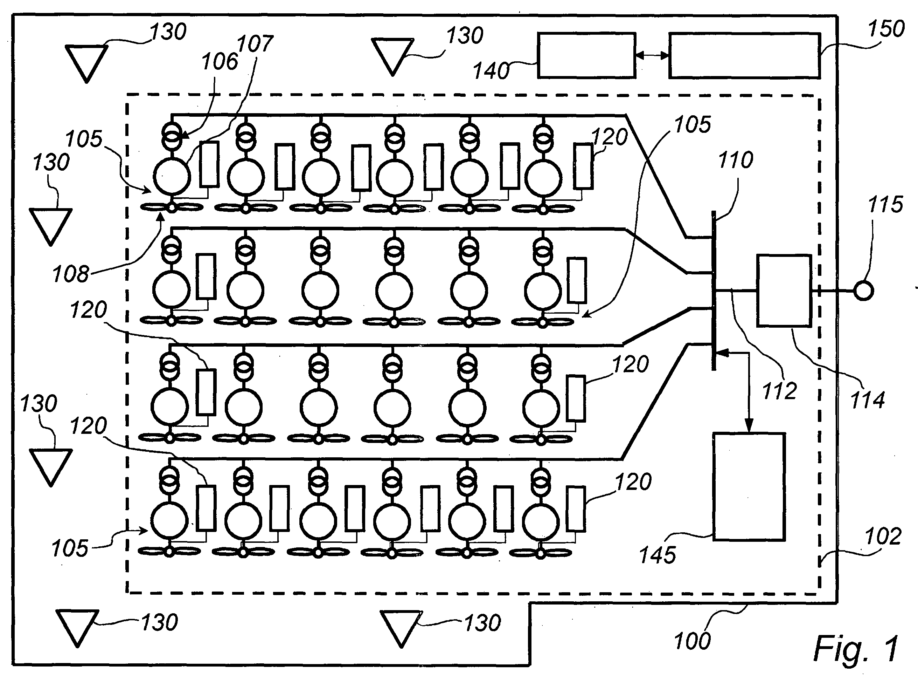

Referring now to Fig. 1, there is shown a schematic block diagram of a system 100 for producing electrical power according to an embodiment of the present invention. The system 100 comprises a wind farm or wind power plant 102.

The wind farm 102 of the system 100 comprises a set of wind turbine units. Only some of the wind turbine units depicted in Fig. 1 are schematically indicated by 105. Each wind turbine unit 105 of the set of wind turbine units 105 is adapted to produce electrical power based on kinetic energy extracted from wind.

Each wind turbine unit 105 may comprise a voltage adjusting unit, e.g. an alternate current (AC) or direct current (DC) transformer 106, a tower 107, and a rotor 108, as indicated in Fig. 1. In Fig. 1, the transformer 106, tower 107 and rotor 108 are indicated by reference numerals for one wind turbine unit 105 only. Each wind turbine unit 105 may comprise one or more additional components, such as an electromechanical drive train, a generator, a gearbox, etc. (Not shown in Fig. 1.)

As indicated in Fig. 1, each wind turbine unit 105 of the set of wind turbine units 105 is arranged at a distance from the other wind turbine units 105 of the set of wind turbine units 105 so as to form an assembly of wind turbine units 105. As also indicated in Fig. 1, the wind turbine units 105 are interconnected so as to form a local wind turbine unit grid.

The set of wind turbine units 105 may be located offshore or on land, or partly offshore and partly on land.

In Fig. 1, the wind turbine units 105 are arranged in parallel rows of wind turbine units 105. Alternatively, the arrangement of the wind turbine units 105 may be such that adjacent rows of wind turbine units 105 are staggered relatively to each other. The arrangement of the wind turbine units 105 relatively to each other shown in Fig. 1 is according to an example. Other arrangements are possible, e.g. arrangements where the wind turbine units 105 form hexagonal, triangular, pentagonal or star patterns when viewed from above.

The distance between adjacent wind turbine units 105 in the system 100 may be about five to seven times the diameter of the rotor 108 of the wind turbine units 105. This distance may according to one example define the minimum distance between adjacent wind turbine units 105 in the system 100. Note that Fig. 1 is schematic and not drawn to scale.

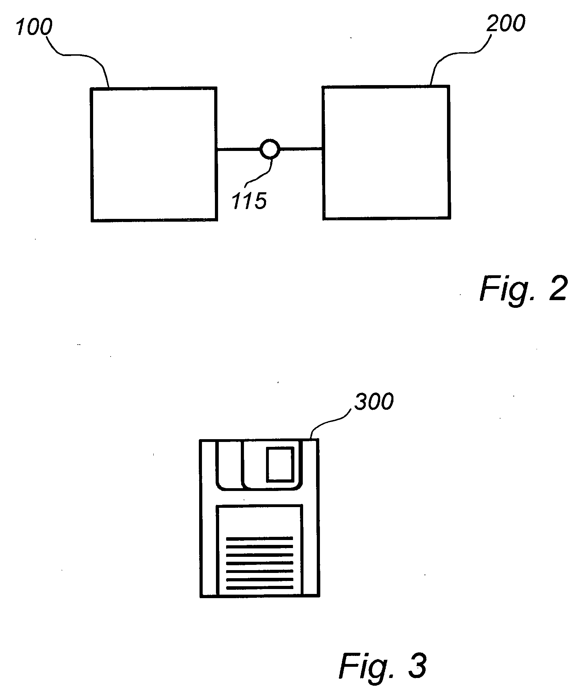

The wind farm 102 of the system 100 comprises a collecting point 110. Each of the wind turbine units 105 is connected to the collecting point 110, e.g. by means of the local wind turbine unit grid mentioned in the foregoing. At the collecting point 110, the voltage may be increased to a level suitable for transmission to a power grid (not shown in Fig. 1, see Fig. 2) to which the system 100 is connected via a point of common coupling (PCC) 115.

The collecting point 110 is connected to the PCC 115 via a power transmission system 112 and an interface 114 to the power grid.

The interface 114 may be adapted to adapt voltage, frequency and/or reactive power of the power transmission system 112 to the voltage, frequency and/or reactive power demand, respectively, of the power grid in the PCC 115.

The wind farm 102 of system 100 comprises a first plurality of sensors 120. Only some sensors 120 shown in Fig. 1 are indicated by reference numeral.

Each sensor 120 of the first plurality of sensors 120 is adapted to sense at least one wind characteristic at a respective wind turbine unit 105 of a proper subset of the set of wind turbine units 105. The at least one wind characteristic may for example comprise speed and/or direction of the wind and/or occurrence and/or level of turbulence.

According to the embodiment depicted in Fig. 1, the proper subset of the set of wind turbine units 105 only includes wind turbine units 105 situated at the periphery of the wind turbine unit 105 assembly. That is, wind characteristic or wind characteristics such as wind speed are only measured at wind turbine units 105 situated at the periphery of the wind turbine unit assembly.

Each sensor 120 of the first plurality of sensors 120, adapted to sense at least one wind characteristic at a respective wind turbine unit 105 of a proper subset of the set of wind turbine units 105, may for example be arranged on the respective wind turbine unit 105, or arranged adjacent to or in spaced relation to the respective wind turbine unit 105, such as shown in Fig. 1.

Each sensor 120 may for example comprise a Light Detection and Ranging (LIDAR) based sensor, a Sound and Navigation Ranging (SONAR) based sensor, a wind wane, and/or an anemometer, etc.

The system 100 comprises a second plurality of sensors 130.

Each sensor 130 of the second plurality of sensors 130 is arranged at a distance with respect to each of the wind turbine units 105 in the set of wind turbine units 105 and is adapted to sense at least one wind characteristic at a location at which the sensor 130 is arranged. The at least one wind characteristic may for example comprise speed and/or direction of the wind and/or occurrence and/or level of turbulence.

Note that Fig. 1 is not drawn to scale. According to one example, each sensor 130 of the second plurality of sensors 130 is remotely located with respect to the wind farm 102 and/or the wind turbine units 105. The distance between each of the sensors 130 and the wind farm 102 and/or each of the wind turbine units 105 may for example be one or a few kilometres or more.

The particular location of each of the sensors 130 relatively to the wind farm 102 and/or the wind turbine units 105 shown in Fig. 1 is according to an example. For example, the locations of the sensors 130 relatively to the wind farm 102 and/or the wind turbine units 105 may be chosen based on the geographic features of the surroundings of the wind farm 102 and/or the wind turbine units 105, especially in case the wind farm 102 and/or the wind turbine units 105 are at least partly located on land.

Based on the general wind direction at the location of the wind turbine units 105, some or most of the sensors 130 may be located upwind or upstream of the wind turbine units 105.

The number of sensors 130 shown in Fig. 1 is according to an example only. In principle, the system 100 may comprise any integer number of sensors 130. The positions of the sensors 130 relatively to the wind farm 102 and/or the set of wind turbine units 105 shown in Fig. 1 are according to an example only.

Each sensor 130 may for example comprise a LIDAR based sensor, a SONAR based sensor, a wind wane, and/or an anemometer, etc.

The system 100 comprises a processing unit 150.

The processing unit 150 and the first and second plurality of sensors 120, 130 are communicatively coupled such that the processing unit 150 is able to receive sensed wind characteristics from each of the first and second plurality of sensors 120, 130. To this end, each of the processing unit 150 and the first and second plurality of sensors 120, 130 may for example comprise a wireless transmit/receive unit (not shown in Fig. 1) capable of communicating in wireless fashion with the other ones of the processing unit 150 and the first and second plurality of sensors 120, 130 such that data can be sent to and from each of the processing unit 150 and the first and second plurality of sensors 120, 130.

The processing unit 150 is adapted to estimate at least one wind characteristic at each wind turbine unit 105 that is not included in the proper subset of the set of wind turbine units 105. This estimation is based on the sensed at least one wind characteristic at the respective wind turbine units 105 of the proper subset of the set of wind turbine units 105, and an estimate of changes in wind characteristic at each wind turbine unit 105 that is not included in the proper subset of the set of wind turbine units 105 that is caused by presence of other wind turbine units 105 of the set of wind turbine units 105.

The estimate of changes in wind characteristic at each wind turbine unit 105 that is not included in the proper subset of the set of wind turbine units 105 that is caused by presence of other wind turbine units 105 of the set of wind turbine units 105 may for example be based on wake calculations and/or wake modelling.

Based on the estimated wind characteristics and sensed wind characteristics, the processing unit 150 is adapted to predict a magnitude of electrical power production by the set of wind turbine units 105 at at least one predefined point in time in the future.

Alternatively, the processing unit 150 may be situated not in the system 100 as shown in Fig. 1 but in a power grid (not shown in Fig. 1, see Fig. 2) to which the system 100 is connected, or at another location. The particular location of the processing unit 150 may be chosen based on the strategy for predicting and possibly also controlling electrical power output from the system 100 that is adopted.

The wind farm 102 of the system 100 comprises a storage unit 140 or data storage unit adapted to store the estimated wind characteristics and/or sensed wind characteristics. The storage unit 140 is coupled with the processing unit 150 to allow the processing unit 150 to retrieve stored wind characteristics and/or other data from the storage unit 140.

The processing unit 150 may be adapted to predict the magnitude of electrical power production by the set of wind turbine units 105 at least at the predefined point in time in the future further on basis of stored estimated wind characteristics and/or sensed wind characteristics retrieved from the storage unit 140, e.g. by means of a machine learning algorithm.

The storage unit 140 may for example comprise a computer server or the like. The storage unit 140 is optional.

The wind farm 102 of the system 100 comprises a reactive and/or active power compensation unit 145 adapted to compensate output voltage supplied to a power grid (not shown in Fig. 1, see Fig. 2) to which the system 100 is connected for reactive and/or active power consumption of the set of wind turbine units 105.

The reactive and/or active power compensation unit 145 may be adapted to compensate output voltage supplied to the power grid to which the system 100 is connected for reactive and/or active power consumption of the set of wind turbine units 105 based on the predicted magnitude of electrical power production by the set of wind turbine units 105 at least at the predefined point in time in the future. This may allow for an increased accuracy in dimensioning the compensation of the output voltage supplied to a power grid to which the system 100 is connected.

As indicated in Fig. 1, reactive and/or active power compensation may be centralized at wind farm 102 'level'. Alternatively or optionally, reactive and/or active power compensation may be decentralized with respect to wind farm 102 level and provided at some or all of the wind turbine units 105.

The reactive and/or active power compensation unit 145 is optional.

The system 100 may comprise an electrical energy storage unit (not shown in Fig. 1) for storing for example electric energy generated by the wind turbine units 105. The electrical energy storage system may for example comprise a battery unit adapted to convert electrical energy into chemical energy and/or vice versa. This may allow for an even faster response to load demand in the power grid and hence facilitate or enable further increase in flexibility in electrical dynamics towards the power grid.

In alternative or in addition to an electrical energy storage unit, the system 100 may comprise at least one dispatchable power plant (not shown in Fig. 1) that may act as an operating reserve and/or for balancing any active power mismatch between the load demand in the power grid and production of electrical power by the system 100.

Referring now to Fig. 2, there is shown a schematic block diagram of a distribution power grid 200, e.g. for delivering electricity to consumers, in accordance with an embodiment of the present invention. The distribution power grid 200 is connected to a system 100 according to an embodiment of the present invention via a PCC 115.

Referring now to Fig. 3, there is shown a schematic view of a computer-readable storage medium 300 according to an embodiment of the present invention. According to the example depicted in Fig. 3, the computer-readable storage medium 300 comprises a floppy disk. On the computer-readable storage medium 300 there is stored a computer program product adapted to, when executed in a processor unit, e.g. a general purpose processor in a computer, perform a method according to the present invention. Although only one type of computer-readable storage medium is shown in Fig. 3, the present invention encompasses embodiments employing any other suitable type of computer-readable storage medium, such as, but not limited to, a non-volatile memory, a hard disk drive, a Compact Disc (CD), a Digital Versatile Disc (DVD), a flash memory, magnetic tape, a USB stick, a Zip drive, etc.

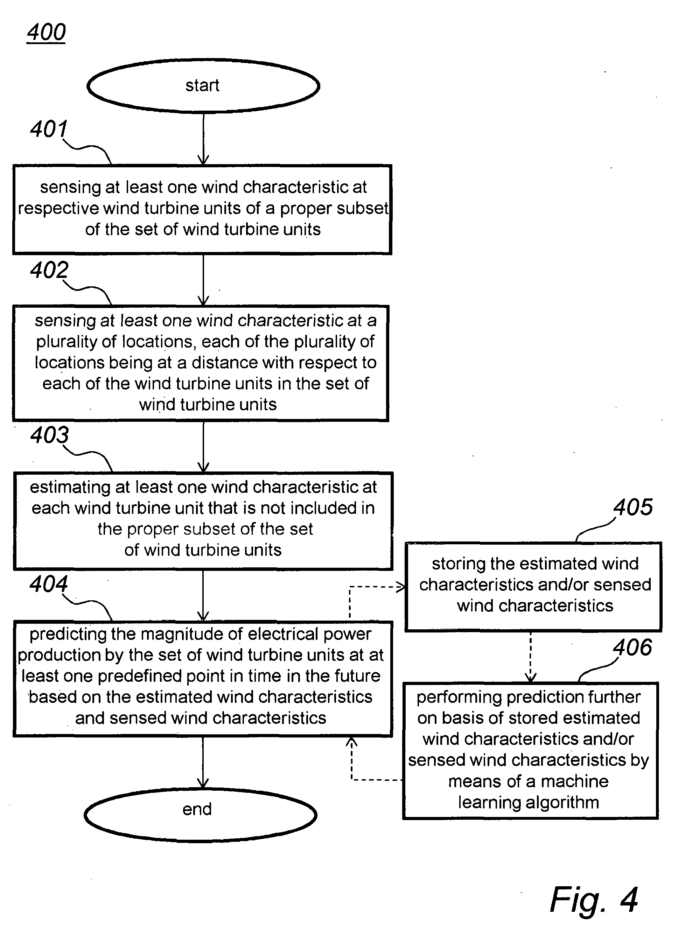

Referring now to Fig. 4, there is shown a schematic flowchart of a method 400 according to an embodiment of the present invention of predicting a magnitude of electrical power production by a system comprising a set of wind turbine units, wherein each wind turbine unit of the set of wind turbine units is adapted to produce electrical power based on kinetic energy extracted from wind.

The method 400 comprises sensing at least one wind characteristic at respective wind turbine units of a proper subset of the set of wind turbine units, 401.

At least one wind characteristic at a plurality of locations is sensed, 402. Each of the plurality of locations is at a distance with respect to each of the wind turbine units in the set of wind turbine units.

Based on the sensed at least one wind characteristic at the respective wind turbine units of the proper subset of the set of wind turbine units and an estimate of changes in wind characteristic at each wind turbine unit that is not included in the proper subset of the set of wind turbine units caused by presence of other wind turbine units of the set of wind turbine units, at least one wind characteristic at each wind turbine unit that is not included in the proper subset of the set of wind turbine units is estimated, 403.

The magnitude of electrical power production by the set of wind turbine units at at least one predefined point in time in the future is predicted, 404, based on the estimated wind characteristics and sensed wind characteristics.

Optionally, the method 400 may comprise storing the estimated wind characteristics and/or sensed wind characteristics, 405.

Optionally, the magnitude of electrical power production by the set of wind turbine units at least at the predefined point in time in the future is predicted further on basis of stored estimated wind characteristics and/or sensed wind characteristics by means of a machine learning algorithm, 406.

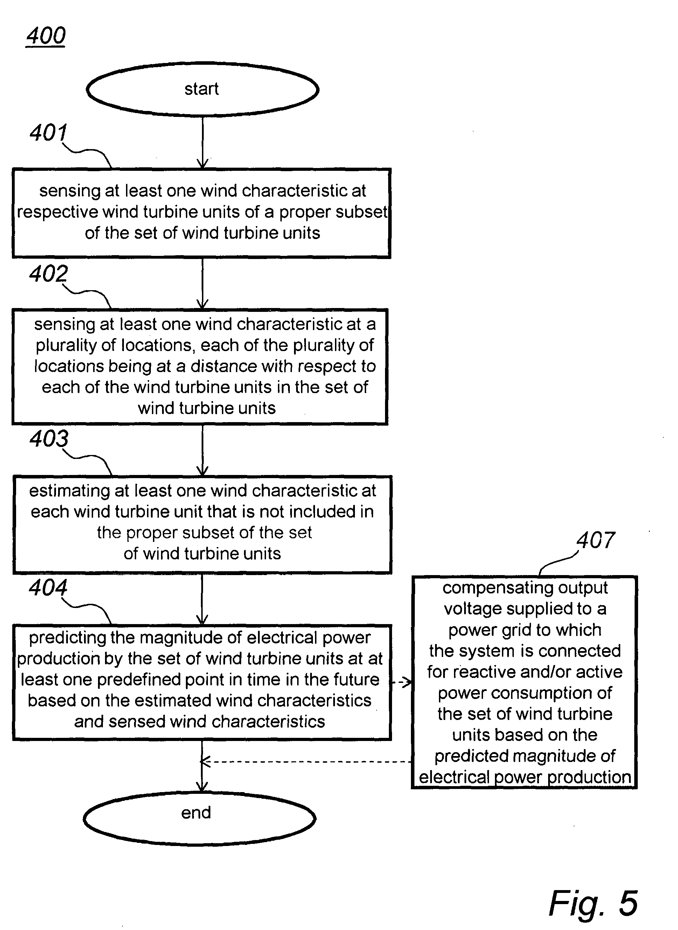

Referring now to Fig. 5, there is shown a schematic flowchart of a method 400 according to another embodiment of the present invention.

The steps 401 to 404 of the method 400 shown in Fig. 5 are similar to or the same as the steps 401 to 404, respectively, of the method 400 shown in Fig. 4.

The method 400 comprises compensating output voltage supplied to a power grid to which the system is connected for reactive and/or active power consumption of the set of wind turbine units based on the predicted magnitude of electrical power production by the set of wind turbine units at least at the predefined point in time in the future, 407.

With reference to Figs. 4 and 5, dashed lines indicate optional steps.

In conclusion, there is disclosed a system for producing electrical power based on wind energy, which system is capable of predicting its power output. The system comprises a set of wind turbine units, a first plurality of sensors each of which is adapted to sense at least one wind characteristic at some of the wind turbine units, and a second plurality of sensors remotely located with respect to the wind turbine units and each of which sensors is adapted to sense at least one wind characteristic. At least one wind characteristic is estimated at the wind turbines not having one of the first plurality of sensors based on sensing by the first plurality of sensors and an estimate of changes in wind characteristic at wind turbine units caused by presence of other wind turbine units. The magnitude of electrical power production by the set of wind turbine units at at least one predefined point in time in the future is predicted based on the estimated wind characteristics and sensed wind characteristics.

## Claims

1. A system (100) for producing electrical power, comprising:
a set of wind turbine units (105), each wind turbine unit of the set of wind turbine units being adapted to produce electrical power based on kinetic energy extracted from wind;
a first plurality of sensors (120), each sensor of the first plurality of sensors being adapted to sense at least one wind characteristic at a respective wind turbine unit of a proper subset of the set of wind turbine units;
a second plurality of sensors (130), each sensor of the second plurality of sensors being arranged at a distance with respect to each of the wind turbine units in the set of wind turbine units and being adapted to sense at least one wind characteristic at a location at which the sensor is arranged; and
a processing unit (150), wherein the processing unit and first and second plurality of sensors are communicatively coupled such that the processing unit is able to receive sensed wind characteristics from each of the first and second plurality of sensors;
the processing unit being adapted to estimate at least one wind characteristic at each wind turbine unit that is not included in the proper subset of the set of wind turbine units, based on:
the sensed at least one wind characteristic at the respective wind turbine units of the proper subset of the set of wind turbine units; and
an estimate of changes in wind characteristic at each wind turbine unit that is not included in the proper subset of the set of wind turbine units caused by presence of other wind turbine units of the set of wind turbine units;
wherein each sensor of the first plurality of sensors is adapted to sense a plurality of successive values of the at least one wind characteristic at the respective wind turbine unit of the proper subset of the set of wind turbine units, and/or each sensor of the second plurality of sensors is adapted to sense a plurality of successive values of the at least one wind characteristic at the location at which the sensor is arranged;
the processing unit being adapted to predict a magnitude of electrical power production by the set of wind turbine units at at least one predefined point in time in the future based on the estimated wind characteristics and a statistical measure of a plurality of values of sensed wind characteristics obtained during at least one time period.

2. A system according to claim 1, wherein each wind turbine unit of the set of wind turbine units is arranged at a distance from the other wind turbine units of the set of wind turbine units so as to form an assembly of wind turbine units, wherein the proper subset of the set of wind turbine units includes wind turbine units situated at a periphery of the wind turbine unit assembly.

3. A system according to claim 2, wherein the proper subset of the set of wind turbine units only includes wind turbine units situated at the periphery of the wind turbine unit assembly.

4. A system according to any one of claims 1-3, further comprising:
a storage unit (140) adapted to store the estimated wind characteristics and/or sensed wind characteristics;
wherein the processing unit is adapted to predict the magnitude of electrical power production by the set of wind turbine units at least at the predefined point in time in the future further on basis of stored estimated wind characteristics and/or sensed wind characteristics by means of a machine learning algorithm.

5. A system according to any one of claims 1-4, further comprising:
a reactive and/or active power compensation unit (145) adapted to compensate output voltage supplied to a power grid to which the system is connected for reactive and/or active power consumption of the set of wind turbine units based on the predicted magnitude of electrical power production by the set of wind turbine units at least at the predefined point in time in the future.

6. A system according to any one of claims 1-5, wherein the at least one wind characteristic comprises speed and/or direction of the wind and/or occurrence and/or level of turbulence.

7. A method (400) of predicting a magnitude of electrical power production by a system comprising a set of wind turbine units, each wind turbine unit of the set of wind turbine units being adapted to produce electrical power based on kinetic energy extracted from wind, the method comprising:
sensing (401) at least one wind characteristic at respective wind turbine units of a proper subset of the set of wind turbine units;
sensing (402) at least one wind characteristic at a plurality of locations, each of the plurality of locations being at a distance with respect to each of the wind turbine units in the set of wind turbine units;
wherein a plurality of successive values of the at least one wind characteristic at the respective wind turbine unit of the proper subset of the set of wind turbine units, and/or a plurality of successive values of the at least one wind characteristic at the respective wind turbine units of the plurality of locations, are sensed;
based on the sensed at least one wind characteristic at the respective wind turbine units of the proper subset of the set of wind turbine units and an estimate of changes in wind characteristic at each wind turbine unit that is not included in the proper subset of the set of wind turbine units caused by presence of other wind turbine units of the set of wind turbine units, estimating (403) at least one wind characteristic at each wind turbine unit that is not included in the proper subset of the set of wind turbine units; and
predicting (404) the magnitude of electrical power production by the set of wind turbine units at at least one predefined point in time in the future based on the estimated wind characteristics and a statistical measure of a plurality of values of sensed wind characteristics obtained during at least one time period.

8. A method according to claim 7, further comprising:
storing (405) the estimated wind characteristics and/or sensed wind characteristics; and
predicting (406) the magnitude of electrical power production by the set of wind turbine units at least at the predefined point in time in the future further on basis of stored estimated wind characteristics and/or sensed wind characteristics by means of a machine learning algorithm.

9. A method according to claim 7 or 8, further comprising:
compensating (407) output voltage supplied to a power grid to which the system is connected for reactive and/or active power consumption of the set of wind turbine units based on the predicted magnitude of electrical power production by the set of wind turbine units at least at the predefined point in time in the future.

10. A computer program product adapted to, when executed in a processor unit, perform a method according to any one of claims 7-9.

11. A computer-readable storage medium (300) on which there is stored a computer program product adapted to, when executed in a processor unit, perform a method according to any one of claims 7-9.

## Patentansprüche

1. System (100) zum Erzeugen von elektrischer Leistung, das Folgendes umfasst:
eine Gruppe von Windturbineneinheiten (105), wobei jede Windturbineneinheit der Gruppe von Windturbineneinheiten ausgelegt ist, elektrische Leistung anhand von kinetischer Energie, die aus dem Wind extrahiert wird, zu erzeugen;
mehrere erste Sensoren (120), wobei jeder Sensor der mehreren ersten Sensoren ausgelegt ist, mindestens eine Windeigenschaft an einer jeweiligen Windturbineneinheit einer geeigneten Untergruppe der Gruppe von Windturbineneinheiten zu erfassen;
mehrere zweite Sensoren (130), wobei jeder Sensor der mehreren zweiten Sensoren in einem Abstand in Bezug auf jede der Windturbineneinheiten in der Gruppe von Windturbineneinheiten angeordnet ist und ausgelegt ist, mindestens eine Windeigenschaft an einem Ort, an dem der Sensor angeordnet ist, zu erfassen; und
eine Verarbeitungseinheit (150), wobei die Verarbeitungseinheit und die mehreren ersten und zweiten Sensoren kommunikativ gekoppelt sind, so dass die Verarbeitungseinheit erfasste Windeigenschaften von jedem der mehreren ersten und zweiten Sensoren empfangen kann;
wobei die Verarbeitungseinheit ausgelegt ist, mindestens eine Windeigenschaft an jeder Windturbineneinheit, die nicht in der geeigneten Untergruppe der Gruppe von Windturbineneinheiten enthalten ist, zu schätzen anhand:
der erfassten mindestens einen Windeigenschaft an den jeweiligen Windturbineneinheiten der geeigneten Untergruppe der Gruppe von Windturbineneinheiten; und
einer Schätzung von Änderungen der Windeigenschaft an jeder Windturbineneinheit, die nicht in der geeigneten Untergruppe der Gruppe von Windturbineneinheiten enthalten ist, die durch die Anwesenheit von anderen Windturbineneinheiten der Gruppe von Windturbineneinheiten verursacht werden;
wobei jeder Sensor der mehreren ersten Sensoren ausgelegt ist, mehrere aufeinanderfolgende Werte der mindestens einen Windeigenschaft an der jeweiligen Windturbineneinheit der geeigneten Untergruppe der Gruppe von Windturbineneinheiten zu erfassen und/oder jeder Sensor der mehreren zweiten Sensoren ausgelegt ist, mehrere aufeinanderfolgende Werte der mindestens einen Windeigenschaft an dem Ort, an dem der Sensor angeordnet ist, zu erfassen;
wobei die Verarbeitungseinheit ausgelegt ist, eine Größe einer elektrischen Leistungserzeugung durch die Gruppe von Windturbineneinheiten zu mindestens einem vordefinieren Zeitpunkt in der Zukunft anhand der geschätzten Windeigenschaften und eines statistischen Maßes von mehreren Werten von erfassten Windeigenschaften, die während mindestens einer Zeitdauer erhalten wurden, vorherzusagen.

2. System nach Anspruch 1, wobei jede Windturbineneinheit der Gruppe von Windturbineneinheiten in einem Abstand von den anderen Windturbineneinheiten der Gruppe von Windturbineneinheiten angeordnet ist, um eine Anordnung von Windturbineneinheiten zu bilden, wobei die geeignete Untergruppe der Gruppe von Windturbineneinheiten Windturbineneinheiten enthält, die sich an einem Umfang der Windturbineneinheitenanordnung befinden.

3. System nach Anspruch 2, wobei die geeignete Untergruppe der Gruppe von Windturbineneinheiten nur Windturbineneinheiten enthält, die sich an dem Umfang der Windturbineneinheitenanordnung befinden.

4. System nach einem der Ansprüche 1-3, das ferner Folgendes umfasst:
eine Speichereinheit (140), die ausgelegt ist, die geschätzten Windeigenschaften und/oder erfassten Windeigenschaften zu speichern;
wobei die Verarbeitungseinheit ausgelegt ist, die Größe der elektrischen Leistungserzeugung durch die Gruppe von Windturbineneinheiten zumindest zu dem vordefinierten Zeitpunkt in der Zukunft anhand von gespeicherten geschätzten Windeigenschaften und/oder erfassten Windeigenschaften mit Hilfe eines Maschinenlernalgorithmus vorherzusagen.

5. System nach einem der Ansprüche 1-4, das ferner Folgendes umfasst:
eine reaktive und/oder aktive Leistungskompensationseinheit (145), die ausgelegt ist, eine Ausgangsspannung, die an ein elektrisches Netz geliefert wird, mit dem das System für einen reaktiven und/oder aktiven Leistungsverbrauch der Gruppe von Windturbineneinheiten verbunden ist, anhand der vorhergesagten Größe der elektrischen Leistungserzeugung durch die Gruppe von Windturbineneinheiten zumindest zu dem vordefinierten Zeitpunkt in der Zukunft zu kompensieren.

6. System nach einem der Ansprüche 1-5, wobei die mindestens eine Windeigenschaft Geschwindigkeit und/oder Richtung des Windes und/oder Auftreten und/oder Pegel einer Turbulenz umfasst.

7. Verfahren (400) zum Vorhersagen einer Größe der elektrischen Leistungserzeugung durch ein System, das eine Gruppe von Windturbineneinheiten umfasst, wobei jede Windturbineneinheit der Gruppe von Windturbineneinheiten ausgelegt ist, elektrische Leistung anhand von kinetischer Energie, die aus dem Wind extrahiert wird, zu erzeugen, wobei das Verfahren Folgendes umfasst:
Erfassen (401) mindestens einer Windeigenschaft an jeweiligen Windturbineneinheiten einer geeigneten Untergruppe der Gruppe von Windturbineneinheiten;
Erfassen (402) mindestens einer Windeigenschaft an mehreren Orten, wobei jeder der mehreren Orte in einem Abstand in Bezug auf jede der Windturbineneinheiten in der Gruppe von Windturbineneinheiten liegt;
wobei mehrere aufeinanderfolgende Werte der mindestens einen Windeigenschaft an der jeweiligen Windturbineneinheit der geeigneten Untergruppe der Gruppe von Windturbineneinheiten und/oder mehrere aufeinanderfolgende Werte der mindestens einen Windeigenschaft an den jeweiligen Windturbineneinheiten der mehreren Orte erfasst werden;
anhand der erfassten mindestens einen Windeigenschaft an den jeweiligen Windturbineneinheiten der geeigneten Untergruppe der Gruppe von Windturbineneinheiten und einer Schätzung von Änderungen der Windeigenschaft an jeder Windturbineneinheit, die nicht in der geeigneten Untergruppe der Gruppe von Windturbineneinheiten enthalten ist, die durch die Anwesenheit von anderen Windturbineneinheiten der Gruppe von Windturbineneinheiten verursacht werden, Schätzen (403) mindestens einer Windeigenschaft an jeder Windturbineneinheit, die nicht in der geeigneten Untergruppe der Gruppe von Windturbineneinheiten enthalten ist; und
Vorhersagen (404) einer Größe einer elektrischen Leistungserzeugung durch die Gruppe von Windturbineneinheiten zu mindestens einem vordefinieren Zeitpunkt in der Zukunft anhand der geschätzten Windeigenschaften und eines statistischen Maßes von mehreren Werten von erfassten Windeigenschaften, die während mindestens einer Zeitdauer erhalten wurden.

8. Verfahren nach Anspruch 7, das ferner Folgendes umfasst:
Speichern (405) der geschätzten Windeigenschaften und/oder erfassten Windeigenschaften; und
Vorhersagen (406) der Größe der elektrischen Leistungserzeugung durch die Gruppe von Windturbineneinheiten zumindest zu dem vordefinierten Zeitpunkt in der Zukunft ferner anhand von gespeicherten geschätzten Windeigenschaften und/oder erfassten Windeigenschaften mit Hilfe eines Maschinenlernalgorithmus.

9. Verfahren nach Anspruch 7 oder 8, das ferner Folgendes umfasst:
Kompensieren (407) der Ausgangsspannung, die an ein elektrisches Netz, mit dem das System für einen reaktiven und/oder aktiven Leistungsverbrauch der Gruppe der Windturbineneinheiten verbunden ist, geliefert wird, anhand der vorhergesagten Größe der elektrischen Leistungserzeugung durch die Gruppe von Windturbineneinheiten zumindest zu dem vordefinierten Zeitpunkt in der Zukunft.

10. Computerprogrammprodukt, das ausgelegt ist, dann, wenn es in einer Verarbeitungseinheit ausgeführt wird, ein Verfahren nach einem der Ansprüche 7-9 auszuführen.

11. Computerlesbares Speichermedium (300), auf dem ein Computerprogrammprodukt gespeichert ist, das ausgelegt ist, dann, wenn es in einer Verarbeitungseinheit ausgeführt wird, ein Verfahren nach einem der Ansprüche 7-9 auszuführen.

## Revendications

1. Système (100) permettant de produire de l'énergie électrique, comprenant :
un ensemble d'unités de turbine éolienne (105), chaque unité de turbine éolienne de l'ensemble d'unités de turbine éolienne étant conçue pour produire de l'énergie électrique en fonction de l'énergie cinétique extraite à partir du vent ;
une première pluralité de capteurs (120), chaque capteur de la première pluralité de capteurs étant conçu pour détecter au moins une caractéristique du vent au niveau d'une unité de turbine éolienne respective d'un sous-ensemble approprié de l'ensemble d'unités de turbine éolienne ;
une deuxième pluralité de capteurs (130), chaque capteur de la deuxième pluralité de capteurs étant placé à une certaine distance par rapport à chacune des unités de turbine éolienne dans l'ensemble d'unités de turbine éolienne et étant conçu pour détecter au moins une caractéristique du vent à un emplacement auquel le capteur est placé ; et
une unité de traitement (150), l'unité de traitement et la première et la deuxième pluralité de capteurs étant couplées de façon communicative de sorte que l'unité de traitement puisse recevoir des caractéristiques du vent détectées à partir de chacune de la première et de la deuxième pluralité de capteurs ;
l'unité de traitement étant conçue pour estimer au moins une caractéristique du vent au niveau de chaque unité de turbine éolienne qui n'est pas incluse dans le sous-ensemble approprié de l'ensemble d'unités de turbine éolienne, en fonction des éléments suivantes :
ladite caractéristique du vent détectée au niveau des unités de turbine éolienne respectives du sous-ensemble approprié de l'ensemble d'unités de turbine éolienne ; et
une estimation de changements de caractéristique du vent au niveau de chaque unité de turbine éolienne qui n'est pas incluse dans le sous-ensemble approprié de l'ensemble d'unités de turbine éolienne provoqués par la présence d'autres unités de turbine éolienne de l'ensemble d'unités de turbine éolienne ;
chaque capteur de la première pluralité de capteurs étant conçu pour détecter une pluralité de valeurs successives de ladite caractéristique du vent au niveau de l'unité de turbine éolienne respective du sous-ensemble approprié de l'ensemble d'unités de turbine éolienne, et/ou chaque capteur de la deuxième pluralité de capteurs étant conçu pour détecter une pluralité de valeurs successives de ladite caractéristique du vent à un emplacement auquel le capteur est placé ;
l'unité de traitement étant conçue pour prédire une magnitude de la production d'énergie électrique par l'ensemble d'unités de turbine éolienne à au moins un temps prédéfini futur en fonction des caractéristiques du vent estimées et d'une mesure statistique d'une pluralité de valeurs de caractéristiques du vent détectées obtenues durant au moins une période de temps.

2. Système selon la revendication 1, dans lequel chaque unité de turbine éolienne de l'ensemble d'unités de turbine éolienne est placée à une certaine distance par rapport aux autres unités de turbine éolienne de l'ensemble d'unités de turbine éolienne pour former un groupe d'unités de turbine éolienne, le sous-ensemble approprié de l'ensemble d'unités de turbine éolienne comprenant des unités de turbine éolienne situées à une périphérie du groupe d'unités de turbine éolienne.

3. Système selon la revendication 2, dans lequel le sous-ensemble approprié de l'ensemble d'unités de turbine éolienne comprend uniquement des unités de turbine éolienne situées à la périphérie du groupe d'unités de turbine éolienne.

4. Système selon l'une quelconque des revendications 1-3, comprenant en outre :
une unité de stockage (140) conçue pour stocker les caractéristiques du vent estimées et/ou des caractéristiques du vent détectées ;
l'unité de traitement étant conçue pour prédire la magnitude de la production d'énergie électrique par l'ensemble d'unités de turbine éolienne au moins au temps prédéfini futur en outre sur la base de caractéristiques du vent estimées stockées et/ou de caractéristiques du vent détectées au moyen d'un algorithme d'apprentissage machine.

5. Système selon l'une quelconque des revendications 1-4, comprenant en outre :
une unité de compensation d'énergie réactive et/ou active (145) conçue pour compenser une tension de sortie fournie à un réseau électrique auquel le système est connecté pour une consommation d'énergie réactive et/ou active de l'ensemble d'unités de turbine éolienne en fonction de la magnitude prédite de production d'énergie électrique par l'ensemble d'unités de turbine éolienne au moins au temps prédéfini futur.

6. Système selon l'une quelconque des revendications 1-5, dans lequel ladite caractéristique du vent comprend une vitesse et/ou une direction du vent et/ou l'apparition et/ou le niveau de turbulence.

7. Procédé (400) permettant de prédire une magnitude de production d'énergie électrique par un système comportant un ensemble d'unités de turbine éolienne, chaque unité de turbine éolienne de l'ensemble d'unités de turbine éolienne étant conçue pour produire une énergie électrique en fonction de l'énergie cinétique extraite à partir du vent, le procédé comprenant les étapes suivantes :
détecter (401) au moins une caractéristique du vent au niveau d'unités de turbine éolienne respectives d'un sous-ensemble approprié de l'ensemble d'unités de turbine éolienne ;
détecter (402) au moins une caractéristique du vent à une pluralité d'emplacements, chacun de la pluralité d'emplacements étant situé à une certaine distance par rapport à chacune des unités de turbine éolienne dans l'ensemble d'unités de turbine éolienne ;
une pluralité de valeurs successives de ladite caractéristique du vent au niveau de l'unité de turbine éolienne respective du sous-ensemble approprié de l'ensemble d'unités de turbine éolienne, et/ou une pluralité de valeurs successives de ladite caractéristique du vent au niveau des unités de turbine éolienne respectives de la pluralité d'emplacements, étant détectées ;
sur la base de ladite caractéristique du vent détectée au niveau des unités de turbine éolienne respectives du sous-ensemble approprié de l'ensemble d'unités de turbine éolienne et d'une estimation de changements de la caractéristique du vent au niveau de chaque unité de turbine éolienne qui n'est pas incluse dans le sous-ensemble approprié de l'ensemble d'unités de turbine éolienne provoqués par la présence d'autres unités de turbine éolienne de l'ensemble d'unités de turbine éolienne, estimer (403) au moins une caractéristique du vent au niveau de chaque unité de turbine éolienne qui n'est pas incluse dans le sous-ensemble approprié de l'ensemble d'unités de turbine éolienne ; et
prédire (404) la magnitude de production d'énergie électrique par l'ensemble d'unités de turbine éolienne à au moins un temps prédéfini futur en fonction des caractéristiques du vent estimées et d'une mesure statistique d'une pluralité de valeurs de caractéristiques du vent détectées obtenues durant au moins une période de temps.

8. Procédé selon la revendication 7, comprenant en outre les étapes suivantes :
stocker (405) les caractéristiques du vent estimées et/ou des caractéristiques du vent détectées ; et
prédire (406) la magnitude de production d'énergie électrique par l'ensemble d'unités de turbine éolienne au moins au temps prédéfini futur en outre sur la base de caractéristiques du vent estimées stockées et/ou de caractéristiques du vent détectées au moyen d'un algorithme d'apprentissage machine.

9. Procédé selon la revendication 7 ou 8, comprenant en outre l'étape suivants :
compenser (407) une tension de sortie fournie à un réseau électrique auquel le système est connecté pour une consommation d'énergie réactive et/ou active de l'ensemble d'unités de turbine éolienne en fonction de la magnitude prédite de production d'énergie électrique par l'ensemble d'unités de turbine éolienne au moins au temps prédéfini futur.

10. Produit programme d'ordinateur permettant, lorsqu'il est exécuté dans une unité de traitement, de mettre en oeuvre un procédé selon l'une quelconque des revendications 7-9.

11. Support de stockage lisible par ordinateur (300) sur lequel est stocké un produit programme d'ordinateur permettant, lorsqu'il est exécuté dans une unité de traitement, de mettre en oeuvre un procédé selon l'une quelconque des revendications 7-9.
